(19) Europäisches Patentamt
European Patent Office
Office européen des brevets

(11) Publication number: **0 119 492**
**B1**

(12) **EUROPEAN PATENT SPECIFICATION**

(45) Date of publication of patent specification: **07.01.88**

(51) Int. Cl.$^4$: **H 01 B 3/44**, C 08 K 5/52, C 08 L 23/08

(21) Application number: **84101688.4**

(22) Date of filing: **17.02.84**

(54) **Composition for insulating electrical wire and cable.**

(30) Priority: **18.03.83 US 476893**

(43) Date of publication of application:
**26.09.84 Bulletin 84/39**

(45) Publication of the grant of the patent:
**07.01.88 Bulletin 88/01**

(84) Designated Contracting States:
**BE CH DE FR GB IT LI**

(56) References cited:
**US-A-3 375 304**
**US-A-3 419 524**

**CHEMICAL ABSTRACTS, vol. 89, 1978, page 83, no. 111422w, Columbus, Ohio, US.**

(73) Proprietor: **Champlain Cable Corporation**
**Hercules Plaza**
**Wilmington Delaware 19894 (US)**

(72) Inventor: **McRae, Howard Francis**
**P.O. Box 1030**
**Cambridge/Vermont 05444 (US)**

(74) Representative: **Wey, Hans-Heinrich, Dipl.-Ing. et al**
**Patentanwälte Müller-Börner & Wey**
**Widenmayerstrasse 49**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 119 492 B1

Courier Press, Leamington Spa, England.

**Description**

This invention relates to a composition useful as insulation for electrical wire and cable having good heat resistance and improved water resistance, and to a method for preparing wire and cable insulated with the composition.

Conventionally, for use as electrical insulation, a nonconductive polymeric material, or a blend of two or more polymeric materials, is modified by the addition of specific additives to enhance or tone down the various physical characteristics of the polymeric material or blend so that the resulting composition will meet the needs of the specific environment in which wire and cable insulated with the composition is to be used.

U.S. Patents, Nos. 3,419,524 and 3,375,304, to Larrison disclose polyphosphites of a group in which the polyphosphite of this invention appear to fall, and their use as stabilizers for polymers and to improve the fire resistance of, inter alia, polyolefins. However, these patents do not disclose a composition having good heat resistance and low water absorption characteristics suitable for use as insulation for electrical wire and cable.

A composition comprising a polymer and a polyphosphite stabiliser is decribed in C.A. 89:111422w as showing improved heat stability. In particular, a PVC composition is described which contains, besides conventional compounding ingredients, 0.5 parts of decaphenyl heptakis (dipropylene glycol) octaphosphite per 100 parts of PVC.

According to the invention a composition comprising a polymer and a polyphosphite stabilizer is characterized in that the polymer is an ethylene-vinyl acetate copolymer material which is capable of being cross-linked by ionizing radiation, the polyphosphite has the formula:

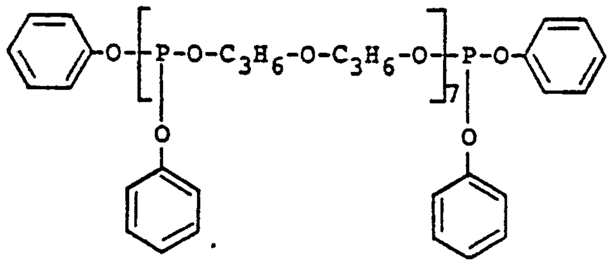

and is present in an amount from 0.5% to 5%, by weight of the copolymer, and the composition contains from 0.5% to 5%, by weight of the copolymer, of at least one hindered phenolic compound.

This invention also comprises a method for producing electrical wire and cable insulated with the composition by admixing a polymer and a polyphosphite stabilizer to form a composition, extruding the composition about a wire conductor, and subjecting the composition on the wire conductor to electron beam radiation or ionizing radiation to cause the desired amount of cross-linking wherein the polymer is an ethylene-vinyl acetate copolymer material capable of being cross-linked by radiation, the polyphosphite has the formula set forth above and is present in an amount from 0.5% to 5%, by weight of the copolymer, and the composition is admixed with from 0.5% to 5%, by weight of the copolymer, of at least one hindered phenolic compound.

The composition exhibits good heat resistance and low water absorption and is useful as insulation for electrical wire and cable.

All parts and percentages in this disclosure are by weight of the total composition unless otherwise indicated.

Preferably the hindered phenolic compound and the polyphosphite are each present in an amount from about 0.5% to about 3%.

The ethylene-vinyl acetate copolymer material comprises one or more ethylene-vinyl acetate copolymers. Preferably each copolymer has a polymerized vinyl acetate content of from 8% to 20% by weight of the copolymer, and most preferably from 8% to 12%.

Suitable hindered phenols include tetrakis[methylene-(3,5-di-t-butyl-4-hydroxy-hydrocinnamate)]-methane and tris-(3,5-di-t-butyl-4-hydroxybenzyl) isocyanurate.

The polyphosphite of this invention can be prepared by any of the methods set forth in the U.S. Patent, No. 3,419,524, to Larrison.

Typically, the composition will contain conventional compounding ingredients, such as stabilizers, flame retardants, fillers, hydroperoxide decomposers, coupling agents, crosslinking agents, lubricants and other process aids, and mixtures thereof.

Suitable stabilizers include zinc oxide and zinc sulfide. Typical flame retardant materials include halogenated aromatic compounds, such as decabromodiphenyl oxide and N,N,'-ethylene-bis(tetrabromophthalimide), and inorganic compounds, such as antimony oxides. Antimony oxides, carbon black and the like can be used as fillers.

Typical hydroperoxide decomposers include distearylthiodipropionate.

Vinyl tris(2-methoxyethoxy) silane is a suitable coupling agent. Trimethylol propane trimethacrylate can be employed as the crosslinking agent.

Suitable lubricants include zinc stearate. Ethylenepropylene-diene monomer elastomeric resins are typical process aids which can be added to the composition of this invention.

The composition is used by extruding it as a coating about a wire conductor, such as copper, and irradiating it on the wire with a sufficient amount of ionizing radiation to achieve the degree of cross-linking desired. Two or more of these extrusion coated wire conductors can be used to form a cable by gathering the insulated wire conductors, optionally twisting them together, to form a bundle of suitable size, and extruding an outer layer of the same or different polymeric material about the bundled coated conductors. Suitable materials for a different polymeric outer layer are polyethylene, ethylene-propylene copolymer rubbers, and chlorosulfonated polyethylene. Optionally, the polymeric outer layer material can contain a filler.

Suitable source of ionizing radiation include high energy electron accelerators, gamma rays and X-rays. Typically, a dose of from about $10^4$ Gy to about $5.10^5$ Gy for about 0.1 second to about 30 seconds is sufficient to cause the desired amount of cross-linking.

The following examples illustrate aspects of the present invention.

Examples 1—3

This example illustrates three specific embodiments of the composition of this invention, and how to prepare them.

The specific components and the proportions of each component used for each composition are set forth below in Table I.

TABLE I

| Components | Examples 1 | Examples 2 | Examples 3 |
|---|---|---|---|
| | Concentration in parts by weight | | |
| Ethylene-vinyl acetate copolymer | 100 | 100 | 100 |
| Tris(3,5-di-t-butyl-4-hydroxybenzyl)-isocyanurate | — | 2 | 2 |
| Tetrakis[methylene(3,5-di-t-butyl-4-hydroxy-hydrocinnamate)] methane | 2 | — | 2 |
| Polyphosphite | 2 | 2 | 2 |
| Decabromodiphenyl oxide | 60 | 60 | 60 |
| Antimony trioxide | 30 | 30 | 30 |
| Zinc oxide | 4 | 4 | 4 |
| Vinyl-tris(2-methoxyethoxy)silane | 1 | 1 | 1 |
| Trimethylol propane trimethacrylate | 6 | 6 | 6 |

The embodiments of Table 1 are made by placing the components in a mixer and stirring until a homogeneous mixture is obtained.

Wire specimens are insulated by extrusion coating the compositions about a copper wire conductor and radiating until the desired extent of cross-linking of the composition is achieved.

In actual work with wire insulated with the compositions of this invention, which compositions have been subsequently cross-linked by ionizing radiation, the typical results set forth below were obtained.

The water absorption of each of the wire specimens insualted with the compositions of Examples 1, 2, and 3 as set forth in Table I, and of each of the three control specimens insulated with the compositions as set forth in Table I for Examples 1, 2, and 3, respectively, except that in each of the control specimens distearyl pentaerythritol diphosphite is used instead of the polyphosphite of this invention was tested.

Three sections, approximately 4,5 m in length, of each of the insulated wire specimens are used to conduct the water absorption test, 3,0 m of which is submerged in a water bath maintained at 75°C throughout the test. The three sections of each of the specimens are tested according to the procedures of the IPCEA accelerated water absorption test, a standard test for water absorption.

Basically this test is an electrical measure of the water absorption of the insulation material. The IPCEA test requires that the 1 to 14 day change in capacitance be no greater than 3%, and that the 7 to 14 day change in capacitance be no greater than 1.5%. The results are shown in Table II.

TABLE II
IPCEA water absorption, % change

| | Ex. 1 | C.S.* 1 | Ex. 2 | C.S. 2 | Ex. 3 | C.S. 3 |
|---|---|---|---|---|---|---|
| Test I | | | | | | |
| 1—14 days | zero | 13.81 | zero | 5.03 | 2.03 | 7.92 |
| 7—14 days | zero | 2.99 | 0.16 | 1.39 | 0.55 | 2.14 |
| Test II | | | | | | |
| 1—14 days | zero | 13.15 | 3.92 | 6.52 | 2.24 | 6.64 |
| 7—14 days | zero | 3.84 | 0.63 | 0.88 | 0.36 | 2.18 |
| Test III | | | | | | |
| 1—14 days | 0.17 | 9.51 | 0.63 | 4.75 | 3.20 | 6.59 |
| 7—14 days | 1.22 | 3.11 | zero | 1.96 | 1.48 | 2.17 |

*C.S. = control specimen

Typical heat resistance of wire specimens, except that six sections, approximately 12.7 cm in length, of each of the wire specimens are used, is shown in Table III below. The tensile strength and elongation of each section of each wire specimen was measured by an Instron tensile tester. Each of the 12.76 cm sections was placed in an oven maintained at the temperature indicated in the data set forth in Table III throughout the period of time indicated in Table III. At the end of each test period, each of the wire specimen sections was removed from the oven, and the tensile strength and elongation measured by an Instron tensile tester. The wire specimens sections gave the results set forth below in Table III.

TABLE III
Heat Resistance

| | Ex. 1 | C.S.* 1 | Ex. 2 | C.S. 2 | Ex. 3 | C.S. 3 |
|---|---|---|---|---|---|---|
| Initial Tensile Strength, bar | 157.6 | 175.9 | 152.3 | 159.6 | 176.3 | 172.7 |
| Initial % Elongation | 437 | 420 | 407 | 403 | 470 | 433 |
| Air Aging, 3 days at 180°C | | | | | | |
| Tensile, bar | 138.5 | 165.0 | — | — | 156.3 | 161.5 |
| % Elongation | 377 | 387 | — | — | 407 | 443 |
| Air Aging, 5 days at 180°C | | | | | | |
| Tensile, bar | 57.1 | 68.0 | — | — | 64.7 | — |
| % Elongation | 10 | 33 | — | — | 10 | — |
| Air Aging, 7 days as 158°C | | | | | | |
| Tensile, bar | 143.7 | 163.2 | 123.3 | 133.7 | 163.7 | 167.1 |
| % Elongation | 467 | 490 | 337 | 387 | 463 | 473 |
| Air Aging, 14 days at 158°C | | | | | | |
| Tensile, bar | 145.5 | 169.5 | 54.4 | 55.7 | 160.1 | 163.4 |
| % Elongation | 373 | 400 | — | 7 | 387 | 417 |
| Air Aging, 21 days at 158°C | | | | | | |
| Tensile, bar | 129.9 | 166.8 | — | — | 136.7 | — |
| % Elongation | 297 | 367 | 0 | — | 323 | — |
| Air Aging, 25 days at 158°C | | | | | | |
| Tensile, bar | 83.1 | 163.2 | — | — | 97.2 | — |
| % Elongation | 12 | 353 | — | — | 17 | — |

*C.S. = control specimen

Thus, it can be seen from the water absorption test data set forth in Table II that the control specimens insulated with compositions containing the distearly pentaerythritol diphosphite and at least one hindered phenolic compound evidenced very poor water resistance, whereas the wire specimens insulated with compositions containing the polyphosphite instead of the distearyl pentaerythritol diphosphite together with at least one hindered phenolic compound evidenced good water resistance.

The heat resistance test data set forth in Table III show that the control specimens insulated with compositions containing the distearyl pentaerythritol diphosphite and at least one hindered phenolic compound generally had good heat aging, whereas the wire specimens insulated with compositions containing the polyphosphite in place of the distearyl pentaerythritol diphosphite in combination with at least one hindered phenolic compound usually evidenced somewhat less, but still good, thermal stability. It should be noted, however, that the wire specimen insulated with the composition of Example 3 evidenced better long range heat resistance than control specimen 3.

Example 4

This example illustrates another embodiment of the composition of this invention.

The composition is prepared according to the procedure set forth in Examples 1—3 using the components set forth below.

| Components | Concentration in parts by weight |
|---|---|
| Ethylene-vinyl acetate copolymer | 90 |
| Tris(3,5-di-t-butyl-4-hydroxybenzyl)isocyanurate | 2 |
| Tetrakis[methylene(3,5-di-t-butyl-4-hydroxy-hydrocinnamate)] methane | 2 |
| Polyphosphite | 2 |
| N,N′-ethylenebis(tetrabromophthalimide) | 60 |
| Antimony trioxide | 30 |
| Zinc sulfide | 4 |
| Vinyl-tris(2-methoxyethoxy)silane | 1 |
| Trimethylol propane trimethacrylate | 6 |
| Distearylthiodipropionate | 1 |
| Zinc stearate | 1 |
| Ethylene-propylene-diene monomer elastomeric resin* | 10 |

*Marketed under the trademark Nordel 2722 by E. I. duPont de Nemours & Co.

The water absorption and heat resistance of wire specimens insulated with the composition of Example 4, which composition was subsequently cross-linked by ionizing radiation, were also tested in the manner indicated above for the other wire specimens. Typical results of these tests are set forth in Table IV.

TABLE IV

| | |
|---|---|
| IPCEA water absorption, % change | |
| Test I | |
| 1—14 days | 1.12 |
| 7—14 days | zero |
| Test II | |
| 1—14 days | 2.07 |
| 7—14 days | 0.18 |
| Test III | |
| 1—14 days | 1.50 |
| 7—14 days | 0.37 |
| Heat Resistance | |
| Initial Tensile Strength, bar | 194.4 |
| Initial % Elongation | 410 |
| Air Aging, 3 days at 180°C | |
| Tensile, bar | 162.6 |
| % Elongation | 307 |
| Air Aging, 5 days at 180°C | |
| Tensile, bar | 142.5 |
| % Elongation | 313 |
| Air Aging, 7 days at 158°C | |
| Tensile, bar | 171.2 |
| % Elongation | 365 |
| Air Aging, 14 days at 158°C | |
| Tensile, bar | 177.7 |
| % Elongation | 372 |
| Air Aging, 21 days at 158°C | |
| Tensile, bar | 135.2 |
| % Elongation | 277 |
| Air Aging, 25 days at 158°C | |
| Tensile, bar | 101.6 |
| % Elongation | 180 |

As the test data set forth in Table IV show, the wire specimen insulated with the composition of Example 4 of this invention evidenced good water resistance and good thermal resistance.

Thus, this invention provides useful compositions having good heat resistance and improved water resistance.

**Claims**

1. A composition for insulating electrical wire and cable which comprises a polymer and a polyphosphite stabilizer, wherein the polymer is an ethylene-vinyl acetate copolymer capable of being cross-linked by ionising radiation, the polyphosphite has the formula:

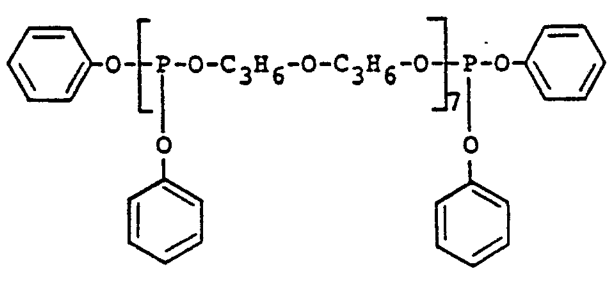

and is present in an amount from 0.5% to 5%, by weight of the copolymer, and the composition contains from 0.5% to 5%, by weight of the copolymer, of at least one hindered phenolic compound.

2. The composition of claim 1 wherein the ethylene-vinyl acetate copolymer has a polymerized vinyl acetate content from 8% to 20% by weight of the copolymer.

3. The composition of claim 2 wherein the ethylene-vinyl acetate copolymer has a polymerized vinyl acetate content from 8% to 12% by weight of the copolymer.

4. A cable which comprises at least two insulated wire conductors and an outer layer of an extruded polymeric material is characterized in that the wire conductors are insulated with the composition of claim 1.

5. A cable which comprises at least two insulated wire conductors and an outer layer of an extruded polymeric material is characterized in that the wire conductors are insulated with the composition of claim 2.

6. A process for making an insulated electrical cable by admixing a polymer and a polyphosphite stabilizer to form a composition; extruding the composition about a wire conductor; and irradiating the composition on the wire conductor until the desired amount of cross-linking has been achieved, wherein the polymer is an ethylene-vinyl acetate copolymer capable of being cross-linked by ionising radiation, the polyphosphite has the formula:

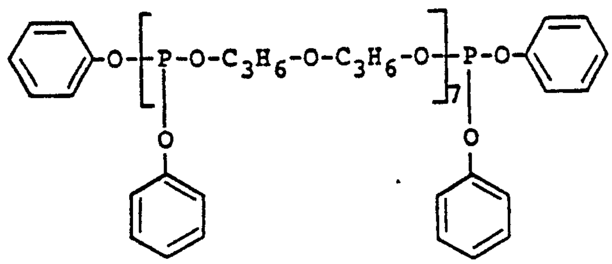

and is present in an amount from 0.5% to 5%, by weight of the copolymer, and the composition is further mixed with from 0.5% to 5%, by weight of the copolymer, of at least one hindered phenolic compound.

7. The process of claim 6 wherein the ethylene-vinyl acetate copolymer has a polymerized vinyl acetate content from 8% to 20% by weight of the copolymer.

**Patentansprüche**

1. Zusammensetzung zum Isolieren von elektrischen Drähten und Kabeln, die ein Polymer und einen Polyphosphit-Stabilisator enthält, dadurch gekennzeichnet, daß das Polymer ein durch ionisierende Strahlung vernetzbares Ethylen-Vinylacetat-Copolymer ist; daß das Polyphosphit die Formel:

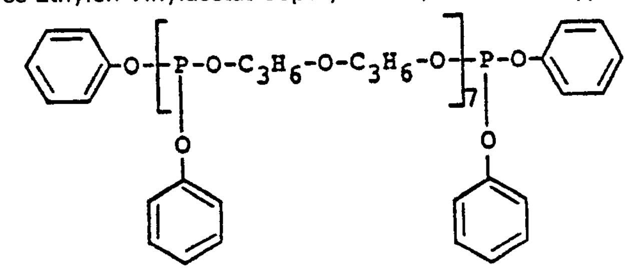

hat und in einer Menge von 0,5 bis 5 Gew.-%, bezogen auf das Copolymer, anwesend ist und daß die Zusammensetzung, bezogen auf das Copolymer, 0,5 bis 5 Gew.-% zumindest einer behinderten Phenolverbindung enthält.

2. Zusammensetzung nach Anspruch 1, dadurch gekennzeichnet, daß das Ethylen-Vinylacetat-Copolymer einen polymerisierten Vinylacetatgehalt von 8 bis 20 Gew.-%, bezogen auf das Copolymer, aufweist.

3. Zusammensetzung nach Anspruch 2, dadurch gekennzeichnet, daß das Ethylen-Vinylacetat-Copolymer einen polymerisierten Vinylacetatgehalt von 8 bis 12 Gew.-%, bezogen auf das Copolymer, aufweist.

4. Kabel, das aus wenigstens zwei isolierten Drahtadern und einer äußeren Lage aus einem extrudierten, polymeren Material besteht, dadurch gekennzeichnet, daß die Drahtadern mit der Zusammensetzung nach Anspruch 1 isoliert sind.

5. Kabel, das aus wenigstens zwei isolierten Drahtadern und einer äußeren Lage aus einem extrudierten, polymeren Material besteht, dadurch gekennzeichnet, daß die Drahtadern mit der Zusammensetzung nach Anspruch 2 isoliert sind.

6. Verfahren zum Herstellen eines isolierten elektrischen Kabels durch Mischen eines Polymeren und eines Polyphosphit-Stabilisators zum Bilden einer Zusammensetzung; Extrudieren der Zusammensetzung um eine Drahtader und Bestrahlen der Zusammensetzung auf der Drahtader, bis der gewünschte

Vernetzungsgrad erreicht ist, dadurch gekennzeichnet, daß das Polymer ein durch ionisierende Strahlung vernetzbares Ethylen-Vinylacetat-Copolymer ist; daß das Polyphosphit die Formel:

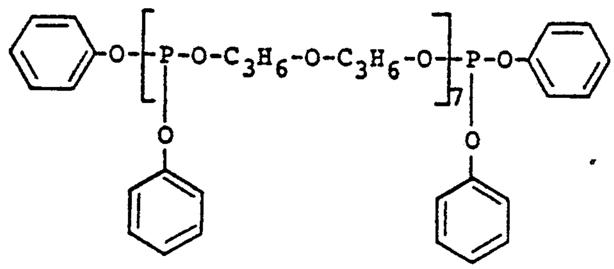

hat und in einer Menge von 0,5 bis 5 Gew.-%, bezogen auf das Copolymer, anwesend ist und daß die Zusammensetzung weiterhin mit, bezogen auf das Copolymer, 0,5 bis 5 Gew.-% einer behinderten Phenolverbindung gemischt wird.

7. Verfahren nach Anspruch 6, dadurch gekennzeichnet, daß das Ethylen-Vinylacetat-Copolymer einen polymerisierten Vinylacetatgehalt von 8 bis 20 Gew.-% bezogen auf das Copolymer, aufweist.

**Revendications**

1. Composition permettant d'isoler du fil et du câble électriques, qui comprend un polymère et un polyphosphite stabilisant et dans laquelle le polymère est un copolymère d'éthylène et d'acétate de vinyle susceptible d'être réticulé à l'aide d'un rayonnement ionisant, le polyphosphite a pour formule:

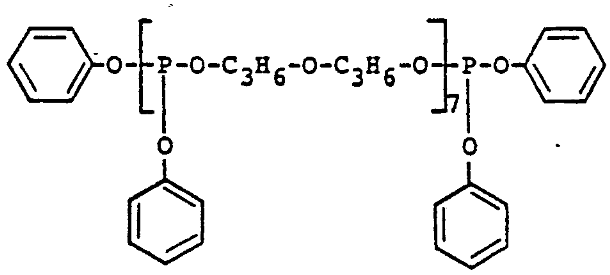

et est présent dans une proportion de 0,5% à 5% en poids par rapport au copolymère, et la composition contient de 0,5% à 5%, en poids par rapport au copolymère, d'au moins un composé phénolique inhibé.

2. Composition de la revendication 1, dans laquelle le copolymère d'éthylène et d'acétaté de vinyle présente une teneur en acétate de vinyle polymérisé de 8% à 20% en poids par rapport au copolymère.

3. Composition de la revendication 2, dans laquelle le copolymère d'éthylène et d'acétate de vinyle présente une teneur en acétate de vinyle polymérisé de 8% à 12% en poids par rapport au copolymère.

4. Câble qui comprend au moins deux conducteurs formés de fils métalliques et isolés et une couche extérieure en une matière polymère extrudée, caractérisé en ce que les conducteurs formés de fils sont isolés à l'aide de la composition de la revendication 1.

5. Cable qui comprend au moins deux conducteurs formés de fils métallique et isolés et une couche extérieure en une matière polymère extrudée, caractérisé en ce que les conducteurs formés de fils sont isolés à l'aide de la composition de la revendication 2.

6. Procédé permettant de réaliser un câble electrique isolé par mélange d'un polymère et d'un polyphosphite stabilisant de façon à former une composition, extrusion de cette composition autour d'un conducteur formé d'un fil, et soumission de cette composition située sur le conducteur formé d'un fil à un rayonnement jusqu'à ce qu'ait été obtenue la proportion voulue de réticulation, procédé dans lequel le polymère est un copolymère d'éthylène et d'acétate de vinyle susceptible d'être réticulé à l'aide d'un rayonnement ionisant, le polyphosphite a pour formule:

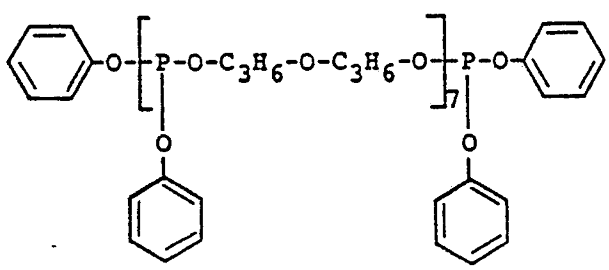

et est présent dans une proportion de 0,5% à 5% en poids par rapport au copolymère, et on mélange en outre à la composition de 0,5% à 5%, en poids par rapport au copolymère, d'au moins un composé phénolique inhibé.

7. Procédé de la revendication 6, dans lequel le copolymère d'éthylène et d'acétate de vinyle présente une teneur en acétate de vinyle polymérise de 8% à 20% en poids par rapport au copolymère.